# EUROPÄISCHE PATENTANMELDUNG

(11) **EP 1 197 390 A2**
(43) Veröffentlichungstag der Anmeldung: **17.04.2002**
(21) Anmeldenummer: 01117353.1
(22) Anmeldetag: 18.07.2001
(51) Int. Cl.: B60R 1/04

(54) **Kraftfahrzeug-Rückblickspiegel**

(30) Priorität: 10.10.2000 DE 10049954
(71) Anmelder: Bühler Motor GmbH, 90459 Nürnberg (DE)
(72) Erfinder: Schieweck, Arno, 97355 Kleinlangheim (DE); Guttenberger, Richard, 91171 Greding (DE)

(57) **Zusammenfassung**

Die Erfindung betrifft einen Kraftfahrzeug-Rückblickspiegel, mit einem Spiegelgehäuse, einem darin montierten Träger auf den ein, zumindest einen Antriebsmotor und ein nachgeordnetes Untersetzungsgetriebe aufweisender, Spiegelglasantrieb, mit dem ein Spiegelglasträger, der vom Spiegelglasantrieb antreibbar ist, um zwei rechtwinklig zueinander angeordnete Schwenkachsen schwenkbeweglich gelagert ist und Anschlüssen zumindest zur Versorgung des zumindest einen Antriebsmotors. Aufgabe der vorliegenden Erfindung ist es einen Kraftfahrzeug-Rückblickspiegel so auszubilden, dass dieser wirtschaftlich herstellbar ist, gute Wartungseigenschaften hat, mit geringem Aufwand verkabelbar ist, ein guter Schutz einer Elektronik vor Beschädigungen und Umwelteinflüssen gewährleistet ist und ein flexibler modularer Aufbau gegeben ist. Diese Aufgabe wird erfindungsgemäß dadurch gelöst, dass zumindest die Versorgung des zumindest einen Antriebsmotors über ein Elektronikmodul, das über zumindest einen ersten Ausgangsstecker mit dem Spiegelglasantrieb elektrisch verbunden ist, erfolgt.

## Beschreibung

Die Erfindung betrifft einen Kraftfahrzeug-Rückblickspiegel, mit einem Spiegelgehäuse, einem darin montierten Träger auf den ein, zumindest einen Antriebsmotor und ein nachgeordnetes Untersetzungsgetriebe aufweisender, Spiegelglasantrieb, mit dem ein Spiegelglasträger, der vom Spiegelglasantrieb antreibbar ist, um zwei rechtwinklig zueinander angeordnete Schwenkachsen schwenkbeweglich gelagert ist und Anschlüssen zumindest zur Versorgung des zumindest einen Antriebsmotors.

Aus der DE-OS 199 19 529 A 1 ist ein Spiegelglasantrieb bekannt, auf den sich die vorliegende Erfindung bezieht, diese Schrift beschreibt den Aufbau des Antriebes und gehört ausdrücklich zum Offenbarungsgehalt dieser Erfindung.

Bei bekannten Kraftfahrzeug-Rückblickspiegeln werden sämtliche Zuleitungen für die einzelnen Funktionseinheiten, wie Spiegelglasantrieb, Abklappantrieb, Blinker, Umfeldbeleuchtung, Spiegelheizung etc. über Litzenleiter als Teile eines Kabelbaums in den Spiegel geleitet. Die Steuerung erfolgt dabei in der Regel über eine zentrale Elektronik. Aufgrund der gestiegenen Anzahl an Funktionseinheiten, die im Kraftfahrzeug-Rückblickspiegel untergebracht werden müssen, insbesondere bei Comfort-Ausstattung, wird es immer schwieriger diese Funktionseinheiten zu versorgen und anzusteuem. Um Abhilfe zu schaffen sind BUS-Steuerungen vorgeschlagen worden, die mit zwei Versorgungs und einer Datenleitung auskommen. Hierfür ist jedoch für jede Funktionseinheit eine BUS-Elektronik erforderlich, die entsprechende Ansteuersignale erkennt und die Versorgungsleitungen durchschaltet. Bei Standard-Ausstattungen ist aus wirtschaftlichen Gründen vorgesehen gleiche Teile, insbesondere den gleichen Spiegelglasantrieb zu verwenden. Dazu ist ein möglichst flexibler modularer Aufbau notwendig.

Aufgabe der vorliegenden Erfindung ist es einen Kraftfahrzeug-Rückblickspiegel so auszubilden, dass dieser wirtschaftlich herstellbar ist, gute Wartungseigenschaften hat, mit geringem Aufwand verkabelbar ist, ein guter Schutz einer Elektronik vor Beschädigungen und Umwelteinflüssen gewährleistet ist und ein flexibler modularer Aufbau gegeben ist.

Diese Aufgabe wird erfindungsgemäß dadurch gelöst, dass zumindest die Versorgung des zumindest einen Antriebsmotors über ein Elektronikmodul, das über zumindest einen ersten Ausgangsstecker mit dem Spiegelglasantrieb elektrisch verbunden ist, erfolgt. Dadurch ist es möglich den Kraftfahrzeug-Rückblickspiegel alternativ mit oder ohne eine Elektronik auszurüsten, dadurch ist der Spiegelglasantrieb in größeren Stückzahlen und daher wirtschaftlicher herstellbar. Zudem ist es möglich bei einer Beschädigung des Spiegelglasantriebes nur diesen auszutauschen, falls die Elektronik noch brauchbar ist.

Weiterbildungen der Erfindung werden in den Unteransprüchen dargestellt. Aus geometrischen Gründen kann es sehr zweckmäßig sein den ersten Ausgangsstecker in mehrere Einzelstecker zu unterteilen. Dadurch können die besonderen geometrischen Verhältnisse des Spiegelglasantriebes besser berücksichtigt werden.

Es ist von Vorteil, das Elektronikmodul zumindest mit einem Eingangsstecker für die Verbindung mit einem Fahrzeugbordnetz und weitere Ausgangsstecker zur Kontaktierung von Funktionseinheiten im oder am Kraftfahrzeug-Rückblickspiegel auszubilden, dadurch kann der Verkabelungsaufwand im Kraftfahrzeug-Rückblickspiegel deutlich verringert werden.

Die Montage des Spiegelglasantriebes auf das Elektronikmodul wird dadurch erleichtert, dass am Spiegelglasantrieb Steckerkontakte für die Kontaktierung mit dem ersten Ausgangsstecker so angeordnet sind, dass sie etwa rechtwinklig zum Spiegelglasträger steckbar sind. Zudem kann der Spiegelglasantrieb dadurch alternativ auch mit dem Träger elektrisch verbunden werden.

Um eine ausreichende Festigkeit der Anordnung aus Spiegelglasantrieb und Elektronikmodul zu erreichen, ist das Elektronikmodul mechanisch mit dem Spiegelglasantrieb verbunden- Dies kann durch Schnappen, Schrauben, Nieten, Kleben oder Schweißen erfolgen.

Vorzugsweise ist das Elektronikmodul lösbar mit dem Spiegelglasantrieb verbunden, weil dadurch bei einer Beschädigung des Spiegelglasantriebes, nicht notwendigerweise auch das Elektronikmodul ausgetauscht werden muss.

Für den Schutz einer Elektronik im Elektronikmodul, besteht dieses aus einem zweiteiligen, eine Kammer begrenzenden Gehäuse. Dabei ist darauf zu achten, dass in die Kammer keine Flüssigkeiten oder Salznebel eindringen können, um Korrosion zu vermeiden.

Der Verkabelungsaufwand im Spiegel kann deutlich reduziert werden, indem das Elektronikmodul eine BUS-Elektronik enthält. Dabei sind in den Steckverbindungen auch Kontakte für zumindest eine Datenleitung vorhanden.

Das Elektronikmodul kann auch eine Steuerelektronik für diverse Verbraucher, insbesondere Blinker, Spiegelheizung, Umfeldbeleuchtung, EC-Glas etc. enthalten, Dies ist vorteilhaft, weil das Elektronikmodul zentral im Kraftfahrzeug-Rückblickspiegel angeordnet ist und somit nur kurze Leitungswege zu überbrücken sind.

Eine gute Bauraumausnutzung ist erreichbar durch Anordnen des Elektronikmoduls zwischen dem Spiegelglasantrieb und dem Träger. Das Elektronikmodul ist dadurch auch relativ gut vor Beschädigungen geschützt.

Um möglichst definierte Einbauverhältnisse zu erhalten ist das Elektronikmodul ausschließlich am Spiegelglasantrieb gehalten. Auch Vibrationen zwischen dem Elektronikmodul und dem Träger können dadurch vermieden werden, insbesondere wenn sichergestellt ist, dass ein Abstand zwischen diesen Teilen vorhanden ist.

Die Montage wird vereinfacht, indem der Eingangsstecker im Träger angeordnet oder Bestandteil des Trägers ist, insbesondere wenn die Steckrichtung des Eingangssteckers mit der des ersten Ausgangssteckers im wesentlichen übereinstimmt.

Ein Ausführungsbeispiel der Erfindung wird nachfolgend anhand der Zeichnung näher erläutert. Es zeigen:
Fig. 1 eine Explosionsdarstellung eines Elektronikmoduls mit einem Spiegelglasantrieb,
Fig. 2 eine Zusammenbauzeichnung des Spiegelglasantriebes mit dem Elektronikmodul und
Fig. 3 eine vereinfachte Darstellung eines erfindungsgemäßen Fahrzeug-Rückblickspiegels.

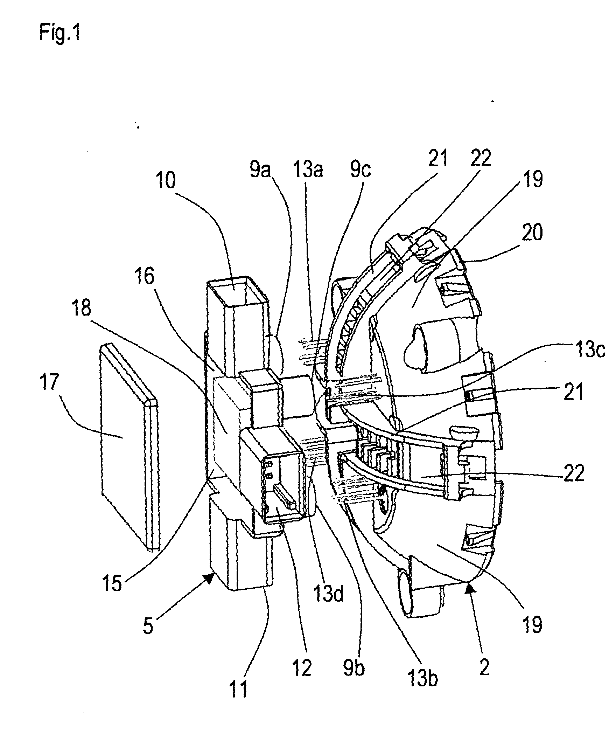

Fig. 1 zeigt eine Explosionsdarstellung eines Spiegelglasantriebes 2, mit einem ersten Antriebsgehäuseteil 19, einem zweiten Antriebsgehäuseteil 20, Führungen 21 im ersten Antriebsgehäuseteil 19 für Verstellelemente 22, Steckerkontakte 13a, 13b, 13c, 13d, die zwischen den Führungen 21 angeordnet sind, einem Elektronikmodul 5, bestehend aus einem ersten Gehäuseteil 16 und einem zweiten Gehäuseteil 17 (hier als Deckel ausgebildet), einem ersten Ausgangsstecker der in Einzel-Ausgangsstecker 9a, 9b, 9c unterteilt ist und mit den Steckerkontakten 13a, 13b, 13c, 13d korrespondiert, einem ersten Eingangsstecker 12, einem zweiten Ausgangsstecker 10, und einem dritten Ausgangsstecker 11.

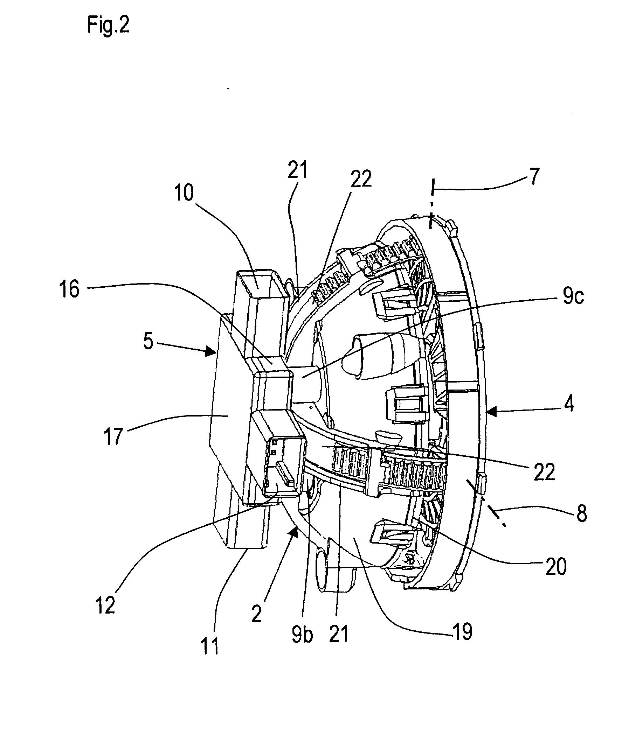

Fig. 2 zeigt eine Zusammenbauzeichnung des Spiegelglasantriebes 2 mit den Verstellelementen 22, die mit einem Spiegelglasträger 4 gelenkig verbunden sind, dem ersten Antriebsgehäuseteil 19, dem zweiten Antriebsgehäuseteil 20, den Führungen 21, dem Elektronikmodul 5, bestehend aus dem ersten Gehäuseteil 16, dem zweiten Gehäuseteil 17, dem Eingangsstecker 12, dem zweiten Ausgangsstecker 10, dem dritten Ausgangsstecker 11 und den Einzel-Ausgangssteckem 9b, 9c.

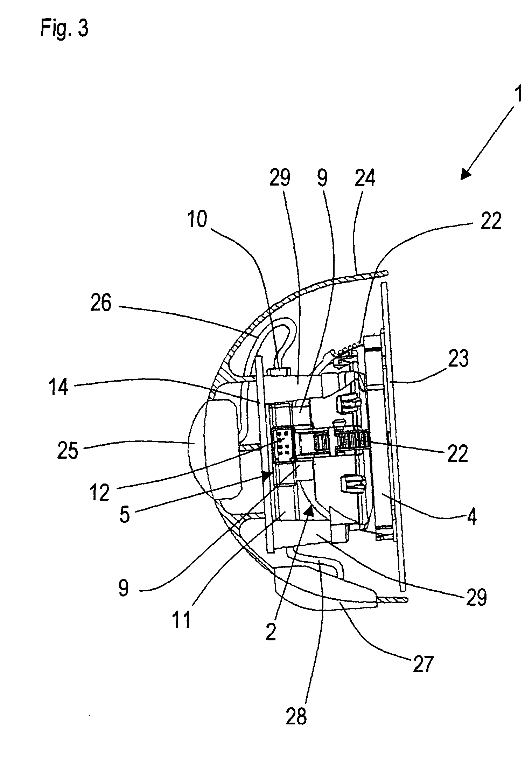

Fig. 3 zeigt eine vereinfachte Darstellung eines erfindungsgemäßen Kraftfahrzeug-Rückblickspiegels 1, mit dem Spiegelglasantrieb 2, mit den Verstellelementen 22 und dem Spiegelglasträger 4, der ein Spiegelglas 23 trägt, dem Elektronikmodul 5, dem Eingangsstecker 12, den ersten Einzel-Ausgangssteckern 9b, 9c, dem zweiten Ausgangsstecker 10, dem dritten Ausgangsstecker 11, einem Träger 14 und ein Spiegelgehäuse 24 an dem ein Blinker 25 angeordnet ist, der elektrisch über Leitungen 26 mit dem zweiten Ausgangsstecker 10 verbunden ist. Weiter ist am Spiegelgehäuse 24 eine Umfeldbeleuchtung 27 angeordnet, die über Leitungen 28 mit dem dritten Ausgangsstecker 11 elektrisch verbunden ist. Die Befestigung des Spiegelglasantriebes 2 am Träger erfolgt über Schraubverbindungen an Befestigungspfosten 29, die mit dem Träger 14 einstückig sind.

### Bezugszeichenliste

- 1: Kraftfahrzeug-Rückblickspiegel
- 2: Spiegelglasantrieb
- 3: Anschlüsse
- 4: Spiegelglasträger
- 5: Elektronikmodul
- 6: Fahrzeugbordnetz
- 7: erste Schwenkachse
- 8: zweite Schwenkachse
- 9: erster Ausgangsstecker (9a, 9b, 9c)
- 10: zweiter Ausgangsstecker
- 11: dritter Ausgangsstecker
- 12: Eingangsstecker
- 13: x Steckerkontakte (13a, 13b, 13c, 13d)
- 14: Träger
- 15: Kammer
- 16: erstes Gehäuseteil
- 17: zweites Gehäuseteil
- 18: Steuerelektronik
- 19: erstes Antriebsgehäuseteil
- 20: zweites Antriebsgehäuseteil
- 21: Führungen
- 22: Verstellelemente
- 23: Spiegelglas
- 24: Spiegelgehäuse
- 25: Blinker
- 26: Leitungen zum Blinker
- 27: Umfeldbeleuchtung
- 28: Leitungen zur Umfeldbeleuchtung
- 29: Befestigungspfosten

## Patentansprüche

1. Kraftfahrzeug-Rückblickspiegel (1), mit einem Spiegelgehäuse, einem darin montierten Träger (14) auf den ein, zumindest einen Antriebsmotor und ein nachgeordnetes Untersetzungsgetriebe aufweisender, Spiegelglasantrieb (2), mit dem ein Spiegelglasträger (4), der vom Spiegelglasantrieb (2) antreibbar ist, um zwei rechtwinklig zueinander angeordneter Schwenkachsen (7, 8) schwenkbeweglich gelagert ist und Anschlüssen (3) zumindest zur Versorgung des zumindest einen Antriebsmotors, **dadurch gekennzeichnet, dass** zumindest die Versorgung des zumindest einen Antriebsmotors über ein Elektronikmodul (5), das über zumindest einen ersten Ausgangsstecker (9a, 9b, 9c) mit dem Spiegelglasantrieb (2) elektrisch verbunden ist, erfolgt.

2. Kraftfahrzeug-Rückblickspiegel nach Anspruch 1, **dadurch gekennzeichnet, dass** der erste Ausgangsstecker in mehrere Einzelstecker (9a, 9b, 9c) unterteilt ist.

3. Kraftfahrzeug-Rückblickspiegel nach Anspruch 2, **dadurch gekennzeichnet, dass** der erste Ausgangsstecker in vier Einzelstecker (9a, 9b, 9c) unterteilt ist.

4. Kraftfahrzeug-Rückblickspiegel nach Anspruch 1, 2 oder 3, **dadurch gekennzeichnet, dass** das Elektronikmodul (5) zumindest einen Eingangsstecker (12) für die Verbindung mit einem Fahrzeugbordnetz (6) und einen zweiten Ausgangsstecker (10) zur Kontaktierung von Funktionseinheiten im oder am Kraftfahrzeug-Rückblickspiegel aufweist.

5. Kraftfahrzeug-Rückblickspiegel nach Anspruch 1, 2, 3 oder 4, **dadurch gekennzeichnet, dass** das Elektronikmodul (5) einen dritten Ausgangsstecker (11) zur Kontaktierung von Funktionseinheiten im oder am Kraftfahrzeug-Rückblickspiegel aufweist.

6. Kraftfahrzeug-Rückblickspiegel nach Anspruch 1, 2, 3, 4 oder 5, **dadurch gekennzeichnet, dass** das Elektronikmodul (5) mehr als drei Ausgangsstecker aufweist.

7. Kraftfahrzeug-Rückblickspiegel nach Anspruch 1, 2, 3, 4, 5 oder 6, **dadurch gekennzeichnet, dass** am Spiegelglasantrieb (2) Steckerkontakte (13a, 13b, 13c, 13d) für die Kontaktierung mit dem ersten Ausgangsstecker (9a, 9b, 9c) so angeordnet sind, dass sie etwa rechtwinklig zum Spiegelglasträger (4) steckbar sind.

8. Kraftfahrzeug-Rückblickspiegel nach Anspruch 7, **dadurch gekennzeichnet, dass** die Steckerkontakte (13a, 13b, 13c, 13d) so ausgebildet sind, dass sie alternativ auch in einen Stecker steckbar sind, der am Träger (14) angeordnet ist.

9. Kraftfahrzeug-Rückblickspiegel nach Anspruch 1, **dadurch gekennzeichnet, dass** das Elektronikmodul (5) mechanisch mit dem Spiegelglasantrieb (2) verbunden ist.

10. Kraftfahrzeug-Rückblickspiegel nach Anspruch 9, **dadurch gekennzeichnet, dass** das Elektronikmodul (5) mit dem Spiegelglasantrieb (2) durch Schnappen, Schrauben, Nieten, Kleben oder Schweißen verbunden ist.

11. Kraftfahrzeug-Rückblickspiegel nach Anspruch 9, **dadurch gekennzeichnet, dass** das Elektronikmodul (5) lösbar mit dem Spiegelglasantrieb (2) verbunden ist.

12. Kraftfahrzeug-Rückblickspiegel nach zumindest einen der vorhergehenden Ansprüche, **dadurch gekennzeichnet, dass** das Elektronikmodul (5) aus zwei, eine Kammer (15) begrenzenden, Gehäuseteilen (16, 17) besteht.

13. Kraftfahrzeug-Rückblickspiegel nach zumindest einem der vorangehenden Ansprüche, **dadurch gekennzeichnet, dass** das Elektronikmodul (5) eine BUS-Elektronik enthält.

14. Kraftfahrzeug-Rückblickspiegel nach zumindest einem der vorangehenden Ansprüche, **dadurch gekennzeichnet, dass** das Elektronikmodul (5) eine Steuerelektronik für diverse Verbraucher, insbesondere Blinker, Spiegelheizung, Umfeldbeleuchtung, EC-Glas etc. enthält.

15. Kraftfahrzeug-Rückblickspiegel nach zumindest einem der vorangehenden Ansprüche, **dadurch gekennzeichnet, dass** das Elektronikmodul (5) zwischen dem Spiegelglasantrieb (2) und dem Träger (14) angeordnet ist.

16. Kraftfahrzeug-Rückblickspiegel nach zumindest einem der vorangehenden Ansprüche, **dadurch gekennzeichnet, dass** das Elektronikmodul (5) mechanisch ausschließlich am Spiegelglasantrieb (2) gehalten ist.

17. Kraftfahrzeug-Rückblickspiegel nach zumindest einem der vorangehenden Ansprüche, **dadurch gekennzeichnet, dass** der Eingangsstecker (12) im Träger (14) angeordnet oder Bestandteil des Trägers (14) ist.

18. Kraftfahrzeug-Rückblickspiegel nach Anspruch 17, **dadurch gekennzeichnet, dass** die Steckrichtung des Eingangssteckers (12) mit der des ersten Ausgangssteckers (9a, 9b, 9c) im wesentlichen übereinstimmt.
